**Europäisches Patentamt**

**European Patent Office**

**Office européen des brevets**

(11) Veröffentlichungsnummer: **0 275 446**

**A1**

(12) ## EUROPÄISCHE PATENTANMELDUNG

(21) Anmeldenummer: **87118084.0**

(22) Anmeldetag: **07.12.87**

(51) Int. Cl.4 **G01T 1/00** , **G01J 5/00**

(30) Priorität: **19.12.86 DE 3643625**

(43) Veröffentlichungstag der Anmeldung:
**27.07.88 Patentblatt 88/30**

(84) Benannte Vertragsstaaten:
**DE FR GB IT NL**

(71) Anmelder: **Heimann GmbH**
**Weher Köppel 6**
**D-6200 Wiesbaden 1(DE)**

(72) Erfinder: **Dennhoven, Manfred, Dipl.-Ing.**
**Lahnstrasse 26**
**D-6200 Wiesbaden(DE)**
Erfinder: **Traupe, Ulrich, Dipl.-Phys.**
**Biebricher Allee 124**
**D-6200 Wiesbaden(DE)**

(74) Vertreter: **Mehl, Ernst, Dipl.-Ing. et al**
**Postfach 22 01 76**
**D-8000 München 22(DE)**

(54) **Röntgenstrahlendetektor.**

(57) Durch die Erfindung wird ein Röntgenstrahlendetektor geschaffen, bei dem eine optimale und fertigungstechnisch einfach durchzuführende Ausrichtung von Photodioden und Szintillationskristallen sichergestellt ist.

Hierzu ist jeder Einzeldetektor aus einer Anordnung nebeneinanderliegender Szintillationseinkristalle (9) und jeweils einer hinter jedem Szintillationseinkristall (9) liegenden Photodiode gebildet. Die Photodioden sind als Sandwichstruktur ausgebildet, die eine gemeinsame lichtdurchlässige Elektrode (10), eine Schicht aus hydriertem amorphem Silizium (11) und Einzelelektroden (12) umfaßt, wobei die Szintillationseinkristalle (9) als Träger für die Sandwichstruktur (10, 11, 12) dienen.

Der erfindungsgemäße Röntgenstrahlendetektor eignet sich besonders zur Anwendung in einem Röntgenscanner zum Untersuchen von Prüfgut auf einer Transportvorrichtung mit Hilfe eines fächerförmigen Röntgenstrahlenbündels und zur Darstellung des jeweils durchstrahlten Bereiches des Prüfgutes auf einem Monitor (Gepäckuntersuchung in Flughäfen).

**FIG 2**

EP 0 275 446 A1

## Röntgenstrahlendetektor

Die Erfindung betrifft einen Röntgenstrahlendetektor mit einer Anordnung nebeneinanderliegender Szintillationseinkristalle und jeweils einer hinter jedem Szintillationseinkristall liegenden Photodiode.

Ein Röntgenstrahlendetektor dieser Art kann z.B. in einem Röntgenscanner zum Durchstrahlen des Passagiergutes in Flughafenkontrollanlagen verwendet werden. Er ist in diesem Fall zeilenförmig ausgebildet. Jeder Einzeldetektor aus einem Szintillationskristall und einer Photodiode besteht bei einem bekannten Röntgenstrahlendetektor aus einem Szintillationskristall aus z.B. mit Tl dotiertem CsJ und einer monokristallinen Silizium-Photodiode. Die auf diesen Röntgenstrahlendetektor auftreffenden Röntgenquanten werden im Szintillationskristall in Lichtquanten umgesetzt, die dann einen Strom in der Photodiode bewirken. Der Strom der Photodiode ist ein Maß für die Intensität der Röntgenstrahlung.

Durch Aneinanderreihung mehrerer monokristalliner Photodioden und segmentierter Szintillationskristalle entstehen Teilstücke einer mehrere hundert Millimeter langen Detektorzeile. Durch die geometrische Größe der monokristallinen Photodioden ist die geometrische Auflösung vorgegeben. Eine Variation ist sehr schwierig, da die Fläche der monokristallinen Photodioden nur mit großem Aufwand variiert werden kann. Auch die optische Ausrichtung der Szintillationskristall-Segmente zu den Photodioden stellt in der Fertigung ein Problem dar. Wegen der notwendigen Anpassung der Kristallgröße an die Photodiodenfläche wird bereits bei geringstem Versatz eine Signalreduzierung hervorgerufen. Ein weiteres Problem ist die Größe des Dunkelstromes. Er schwankt bei den bekannten Röntgenstrahlendetektoren um bis zu 100 % von Photodiode zu Photodiode. Zusätzlich erzeugen die den Szintillationskristall durchdringenden Röntgenquanten durch Absorption in den kristallinen Silizium-Dioden ein störendes Rauschsignal.

Es ist zwar denkbar, die Szintillationseinkristalle z.B. durch eine Sedimentschicht aus aufgeschlämmtem, polykristallinem Szintillationspulver zu ersetzen, jedoch kommt diese Lösung wegen des dann auftretenden deutlichen Verlustes an Szintillationssignal nicht in Frage.

Der Erfindung liegt die Aufgabe zugrunde, einen Röntgenstrahlendetektor der eingangs genannten Art so auszubilden, daß bei einfachem Aufbau eine leichte optische Ausrichtung der Kristallsegmente zu den Photodioden möglich ist und die den Szintillationskristall durchdringenden Röntgenquanten kein zusätzliches Rauschsignal erzeugen.

Diese Aufgabe ist erfindungsgemäß dadurch gelöst, daß die Photodioden jeweils unter Verwendung von hydriertem amorphem Silizium gebildet sind und als Sandwichstruktur ausgeführt sind, die eine allen Photodioden gemeinsame, den Szintillationseinkristallen benachbarte, lichtdurchlässige Elektrode, eine mit dieser verbundene Schicht aus hydriertem amorphem Silizium und auf deren von der gemeinsamen Elektrode abgewandten Seite aufgebrachte Einzelelektroden aufweist. Hydriertes amorphes Silizium kann großflächig als Schicht aufgebracht und durch die Einzelelektroden in der gewünschten Weise in einzelne Photodioden unterteilt werden, wobei eine einwandfreie Zuordnung je eines Szintillationseinkristalls zu einer Photodiode gegeben ist. Außerdem erzeugen die Szintillationseinkristalle durchdringende Röntgenquanten wegen der Verwendung von hydriertem amorphem Silizium für die Photodioden in diesen kein störendes Rauschsignal. Die Sandwichstruktur kann übrigens als Schottky-oder pin-Struktur aufgebaut sein.

In der JP-A-57 172 273 ist zwar ein Strahlungsdetektor beschrieben, bei dem ein Szintillationskristall mit einer Schicht aus amorphem Silizium versehen ist, die als Photodiode wirkt, jedoch weist die Photodiode dort eine laterale Struktur auf, d.h., die Siliziumschicht ist an ihrer von dem Szintillationskristall abgewandten Seite mit nebeneinander angebrachten Elektroden versehen. Da wegen der geringen Beweglichkeit der Ladungsträger in amorphem Silizium der Stromfluß ausschließlich durch Ladungsträgerdrift und nicht durch Ladungsträgerdiffusion erfolgt, weist der bekannte Strahlungsdetektor nur eine geringe Quantenausbeute auf. Eine Anregung, die Photodioden in Sandwichstruktur zu realisieren, ist der genannten Veröffentlichung nicht zu entnehmen. Die Sandwichstruktur gemäß der Erfindung schafft aber erst die Voraussetzung für eine ausreichende Quantenausbeute, da dann über dem gesamten Strompfad der optisch erzeugten Ladungsträger ein elektrisches Feld anliegt.

Außerdem ist in der EP-A-0 189 710 eine lichtempfindliche Anordnung beschrieben, bei der hinter einer Szintillationsschicht eine Photo-FET-Struktur aus hydriertem amorphem Silizium angeordnet ist. Eine solche Photo-FET-Struktur ist deshalb von Nachteil, weil nicht die gesamte Fläche der Photo-FET-Struktur als Detektorfläche wirksam sein kann. Weiter ist bei der bekannten Einrichtung von Nachteil, daß der Photostrom von Photo-FETs im Gegensatz zu dem von Photodioden aus hydriertem amorphem Silizium nicht proportional der Beleuchtungsstärke ist und daß Photo-FETs große Exemplarstreuungen und ein hohes Rauschen aufweisen. Eine Anregung, die Photo-FET-Struktur durch eine Photodiode mit Sandwichstruktur gemäß der Erfindung zu ersetzen, ist der genannten Veröffentlichung nicht zu entnehmen.

Da die Sandwichstruktur in der Praxis eine Dicke von nur ca. 1 µm aufweist, ist sie nicht selbsttragend und bedarf eines Substrates. Eine fertigungstechnisch besonders einfache Lösung besteht deshalb darin, daß die Szintillationseinkristalle den Träger der gemeinsamen, lichtdurchlässigen Elektrode der amorphen Silizium-Photodiode und damit das Substrat für die Sandwichstruktur bilden. Der erfindungsgemäße Röntgenstrahlendetektor ist besonders vorteilhaft in einem Röntgenscanner zur Gepäckuntersuchung auf Flughäfen mit einem ein fächerförmiges Röntgenstrahlenbündel aussendenden Röntgenstrahler auf einer Seite und einer Detektorreihe auf der anderen Seite eines Untersuchungsraumes, durch den Prüfgut auf einer Transportvorrichtung bewegt wird, anwendbar, welcher eine Bildelektronik zum Umwandeln der Detektorsignale der Einzeldetektoren der Detektorzeile in ein sichtbares Bild aufweist.

Die Erfindung ist nachfolgend anhand der Zeichnung näher erläutert. Es zeigen:

Fig. 1 einen Röntgenscanner mit einem Röntgenstrahlendetektor zur Erläuterung des Erfindungsgedankens, und

Fig. 2 einen Ausschnitt aus dem Röntgenstrahlendetektor des Röntgenscanners gemäß Fig. 1, der erfindungsgemäß ausgebildet ist.

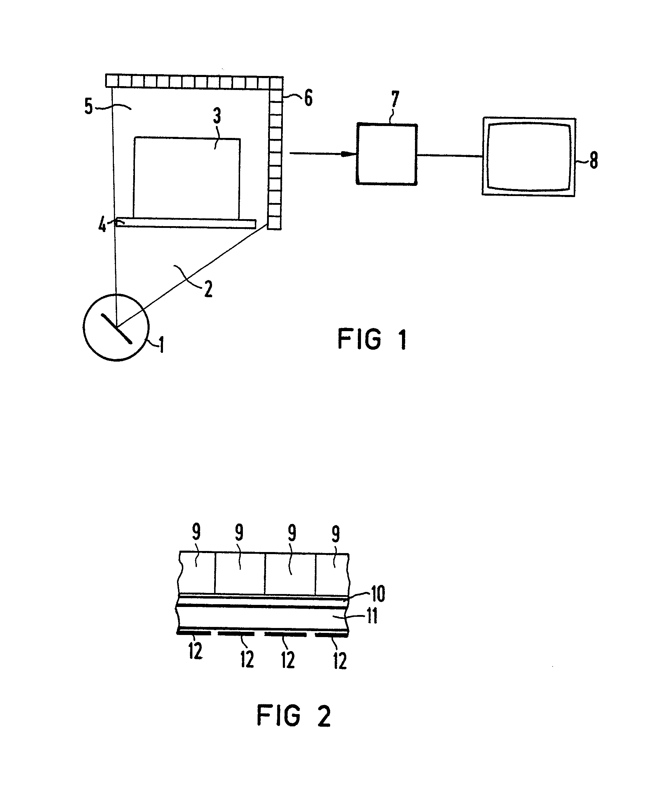

In der Fig. 1 ist ein Röntgenstrahler 1 dargestellt, der ein durch einen Kollimator eingeblendetes, fächerförmiges Röntgenstrahlenbündel 2 aussendet, dessen Fächerebene in der Zeichenebene liegt, und das Prüfgut 3 auf einer von einem Förderband gebildeten Transportvorrichtung 4 - schichtweise durchstrahlt. Die Transportrichtung verläuft dabei senkrecht zur Zeichenebene. Das Prüfgut wird demgemäß durch einen Untersuchungsraum bewegt. Auf der anderen Seite des Untersuchungsraumes 5 ist eine geknickte Detektorzeile 6 aus Einzeldetektoren angeordnet, die der jeweils empfangenen Strahlenintensität entsprechende elektrische Signale bilden. Diese Signale werden mit Hilfe einer Bildelektronik 7 in ein Schattenbild eines jeweils untersuchten Bereiches des Prüfgutes 3 umgesetzt, das auf einem Monitor 8 wiedergegeben wird.

Die Fig. 2 zeigt, daß die Detektorzeile 6 eine Reihe von Einzeldetektoren aufweist, von denen jeder jeweils einen Szintillationseinkristall 9 aufweist. Das von den Szintillationseinkristallen 9 ausgesandte Licht wird mit Hilfe jeweils einer nachgeschalteten Photodiode in ein entsprechendes elektrisches Signal umgewandelt.

Gemäß Fig. 2 ist zur Bildung der Photodioden für die Szintillationseinkristalle 9 auf diesen eine lichtdurchlässige, gemeinsame Elektrode 10, z.B. aus ITO aufgebracht. Auf dieser Elektrode 10 ist großflächig hydriertes amorphes Silizium 11 mit einer Dicke von etwa 1 µm niedergeschlagen. Schließlich ist auf dem Silizium 11 eine Reihe von Einzelelektroden 12 aufgebracht. Die Einzelelektroden 12 können in der Weise aufgebracht werden, daß zunächst eine linienförmige Grundelektrode, z.B. aus Titan, aufgebracht wird, die dann entsprechend der Rastergröße strukturiert wird. Die gemeinsame Elektrode 10, die Schicht aus hydriertem amorphem Silizium 11 und die Einzelelektroden 12 bilden somit eine Sandwichstruktur 10, 11, 12.

Trifft Strahlung des sichtbaren Spektrums auf die Anordnung 10, 11, 12, so fließt nach Anlegen einer Spannung zwischen den Elektroden 10 und 12 ein Strom, der proportional zu der Beleuchtungsstärke ist.

Die Empfindlichkeit einer amorphen Silizium-Photodiode entspricht der einer monokristallinen Photodiode. Im interessierenden Spektralbereich (grün) ist der Quantenwirkungsgrad für beide Typen etwa "1". Beim Dunkelstrom wird aber bei amorphen Silizium-Photodioden eine geringere Streubreite als bei monokristallinen Photodioden erzielt.

Auch die Variation der geometrischen Größe einer amorphen Silizium-Photodiode ist leichter durchzuführen. Die Größe der aktiven Fläche wird durch die Größe jeweils einer der Elektroden 12 bestimmt. Durch geeignete Strukturierung einer großflächig hergestellten Elektrodenfläche läßt sich eine Anzahl von Elektroden der jeweils gewünschten Größe erzeugen.

Wie aus Fig. 2 ersichtlich ist, sind die einzelnen, Segmente bildenden Szintillationseinkristalle 9 als Träger der Sandwich struktur 10, 11, 12 genutzt. Auf diese Weise entstehen keine Fehler durch Versatz und damit keine Verluste durch falsche Ausrichtung der Photodioden zu den Szintillationseinkristallen 9. Außerdem ist durch diesen Aufbau eine verlustfreie optische Ankopplung zwischen den Szintillationseinkristallen 9 und der Sandwichstruktur 10, 11, 12 gewährleistet.

Entsprechend der Fig. 2 kann auch ein flächenförmiger Röntgenstrahlendetektor hergestellt werden. Das Problem der Einzelkontaktierung der einzelnen Punkte kann dadurch gelöst werden, daß die Elektroden zu beiden Seiten einer amorphen Siliziumschicht streifenförmig im Winkel von etwa 90° ausgeführt werden. Dabei ist immer nur diejenige Photodiode aktiv, die sich am Kreuzungspunkt zweier spannungsführender Elektroden befindet.

**Ansprüche**

1. Röntgenstrahlendetektor mit einer Anordnung nebeneinanderliegender Szintillationseinkristalle (9) und jeweils einer hinter jedem Szintillationseinkristall (9) liegenden Photodiode, **dadurch gekennzeichnet,** daß die Photodioden jeweils unter Verwendung von hydriertem amorphem Silizum (11) gebildet und als Sandwichstruktur ausgeführt sind, die eine allen Photodioden gemeinsame den Szintillationseinkristallen (9) benachbarte, lichtdurchlässige Elektrode (10), eine mit dieser verbundene Schicht aus hydriertem amorphem Silizium (11) und auf deren von der gemeinsamen Elektrode (10) abgewandten Seite angebrachte Einzelelektroden (12) aufweist.

2. Röntgenstrahlendetektor nach Anspruch 1, **dadurch gekennzeichnet,** daß die Szintillationskristalle (9) den Träger der gemeinsamen, lichtdurchlässigen Elektrode (10) der Photodioden und damit das Substrat für die Sandwichstruktur (10, 11, 12) bilden.

3. Röntgenstrahlendetektor nach Anspruch 1, **gekennzeichnet durch** die Anwendung in einem Röntgenscanner mit einem ein fächerförmiges Röntgenstrahlenbündel (2) aussendenden Röntgenstrahler (1) auf einer Seite und einer Detektorzeile (6) auf der anderen Seite eines Untersuchungsraumes (5), durch den Prüfgut (3) auf einer Transportvorrichtung (4) bewegt wird, und mit einer Bildelektronik (7) zum Umwandeln der Detektorsignale der Einzeldetektoren der Detektorzeile (6) in ein sichtbares Bild.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | PATENT ABSTRACTS OF JAPAN, Band 7, Nr. 18 (P-170)[1163], 25. Januar 1983; & JP-A-57 172 273 (TOKYO SHIBAURA DENKI K.K.) 23-10-1982 * Zusammenfassung * | 1-3 | G 01 T 1/00 G 01 V 5/00 |
| D,Y | EP-A-0 189 710 (THOMSON-CSF) * Zusammenfassung; Seite 3, Zeilen 6-30; Seite 5, Zeilen 6-10; Figuren * | 1,2 | |
| Y | EP-A-0 036 530 (SIEMENS AG) * Zusammenfassung; Seite 2, Zeile 25 - Seite 3, Zeile 4; Seite 4, Zeilen 12-29; Figuren * | 1,3 | |
| A | EP-A-0 198 276 (HEIMANN GmbH) * Zusammenfassung; Spalte 2, Zeilen 22-46; Figur * | 1,3 | |
| A | EP-A-0 142 865 (FUJI PHOTO FILM CO. LTD) * Seite 8, Zeilen 6-22; Seite 14, Zeile 12 - Seite 15, Zeile 14; Seite 17, Zeile 10 - Seite 18, Zeile 16; Seite 19, Zeilen 8-18; Figuren * | 1,2 | RECHERCHIERTE SACHGEBIETE (Int. Cl.4) G 01 T G 01 V G 01 N |

Der vorliegende Recherchenbericht wurde für alle Patentansprüche erstellt

| Recherchenort | Abschlußdatum der Recherche | Prüfer |
|---|---|---|
| DEN HAAG | 21-03-1988 | DATTA S. |